# EUROPEAN PATENT SPECIFICATION

(11) **EP 4 736 628 B1**
(45) Date of publication and mention of the grant of the patent: **09.09.2026**
(21) Application number: 25212365.8
(22) Date of filing: 30.10.2025
(51) Int. Cl.: A01D 46/26

(54) **PORTABLE BEATER DEVICE FOR OLIVES OR SIMILAR**
TRAGBARE SCHLAGVORRICHTUNG FÜR OLIVEN ODER DERGLEICHEN
DISPOSITIF BATTEUR PORTATIF POUR OLIVES OU SIMILAIRES

(30) Priority: 30.10.2024 GR 20240100767
(43) Date of publication of application: 06.05.2026
(73) Proprietor: Tsoupos, Konstantinos, 42031 Farkadona (GR)
(72) Inventor: Tsoupos, Konstantinos, 42031 Farkadona (GR)
(74) Representative: Braidotti, Andrea

(56) References cited:
- EP-A1- 2 491 782
- EP-A1- 4 374 681
- WO-A1-2022/074596
- CN-A- 114 616 984
- ES-U- 1 305 688

## Description

### TECHNICAL FIELD

The present invention relates to the field of olive beating devices and concerns an electric device for use in harvesting olives with a pulsating motion. In particular, the invention concerns a portable beater for beating or shaking olives or similar hanging fruit.

### STATE OF THE ART

Various types of olive-beating devices are known on the market, such as those with spherical or elliptical type of heads featuring flexible rods on their surfaces. Devices with beating rods that perform a specific, controlled rotary motion combined with a pulsating motion (vibration) are also known, so as to obtain the most efficient possible fall of the fruits from the olive tree. These devices typically use an electric motor and, through well-known motion transmission principles, such as one or more camshafts and connecting rods, the motion is transmitted to one or more elongated elements with combs positioned at their ends.

For purely illustrative purposes, reference is made to patent no. GR1004368B 1004368 entitled "Electrically operated pulsating olive beater with two combs", wherein the motion is transmitted from the electric motor to the camshaft and from there, via a connecting rod, to an elongated element at the ends of which the combs are positioned.

The main disadvantage of the devices known to date is that, despite using motion transmission principles that have been known for many decades, the solutions used to manufacture them are complex, generate strong vibrations and noise, and, from a construction standpoint, significantly increase their production costs, weight, and, above all, the time and cost of repair in the event of a failure, because replacing their components, due to their complex construction, requires the intervention of a specialist and is time-consuming, thus resulting in the loss of many working hours and an increase in repair costs.

Furthermore, known devices operate with a specific, predefined rotation speed and pulsating motion, meaning they cannot adapt to specific operating conditions - related to the variety of olive trees or current weather conditions - and this means neither optimal olive harvesting nor optimal tree protection (leaves, young shoots, etc.) nor energy savings during use are achieved.

Finally, the transmission systems of known devices do not provide adequate structural support, resulting in their operation being affected over time.

A known solution is disclosed in ES1305688.

### OBJECTS OF THE INVENTION

The object of the present invention is to propose a beater device that allows to overcome, at least in part, the drawbacks of known solutions.

In particular, the invention addresses the problem of the complexity of the transmission systems used by currently known devices, which in the event of a failure makes it necessary to take the device out of service and transport it to a specialized technician for repair.

Another object of the invention is to propose a beater device that of easy, quick and economical maintenance.

Another object of the invention is to propose a beater device that is easy, quick and economical to manufacture.

Another object of the invention is to propose a beater device which is simple, quick, convenient and easy to use.

Another object of the invention is to propose a particularly reliable beater device.

Another object of the invention is to propose a highly efficient beater device, both from an energy and from a fruit harvesting point of view.

Another object of the invention is to propose a compact and lightweight beater device.

Another object of the invention is to propose a shaking device that allows the user to adjust the beating speed easily and precisely.

Another object of the invention is to propose a beater device particularly easy and comfortable to use.

Another object of the invention is to propose a beater device which is particularly silent or at least less noisy.

Another object of the invention is to propose a beater device with high energy autonomy.

Another object of the invention is to propose a beater device that complies with industry regulations.

Another object of the invention is to propose a beater device that is an improvement and/or alternative to traditional solutions.

Another object of the invention is to propose a beater device with an alternative characterization, both in functional and implementation terms, compared to traditional ones.

### SUMMARY OF THE INVENTION

One or more of the objects mentioned herein, considered either individually or in any combination thereof, and others which will result from the following description are achieved, according to the invention, with a beater according to claim 1 or 15.

The present invention relates to an electric beater device, of portable type, for harvesting olives or similar hanging fruits, comprising a pole with a grip and a beating head which is fixed to a first end of the pole, characterised in that the beating head comprises:
- two bases on which a plurality of beating rods are mounted,
- an electric motor,
- a motion transmission system configured to transfer the motion generated by the motor to the two bases,
- a containment and protection crankcase wherein the engine is housed and mounted,
and wherein:
- the motion transmission system comprises a first gear wheel and a second gear wheel, which are housed in the crankcase, and two connecting rods, each of which is operationally connected to a corresponding base that supports the rods,
- the first gear wheel is driven directly by the motor and transmits the motion to the second gear wheel,
- the second gear wheel comprises a first eccentric and a second eccentric, arranged respectively on opposite faces of the second gear wheel,
- said first eccentric and said second eccentric are passed through centrally by respective axes which are distinct and parallel to each other, and also off-centred with respect to the central axis of the second wheel,
- each eccentric is operationally connected to a corresponding connecting rod.

Preferably, the largest diameter gear wheel is mounted on two bearings, one upper and one lower, to allow proper alignment and uniform rotation.

Preferably, in one complete rotation of the largest diameter gear wheel, the bases move clockwise and counterclockwise along the same circular arc, returning to their initial position, with a significant phase difference between them.

Preferably, the rods are placed on the bases in determined positions and angles, so as to achieve maximum productivity and at the same time minimize damage to the tree.

Preferably, a screwed top cover and a screwed bottom cover are used to protect the engine and the transmission system.

Preferably, when the user activates the device via the button, the motor, by means of the two gear wheels, the two eccentrics and the two connecting rods, transmits motion to the bases and the rods, and via the buttons selects the appropriate speed, depending on the morphology of the tree, the weather conditions and other parameters, while in the event that, for any reason, the consumption of the device exceeds the desired limits, the control board stops the operation of the motor.

### DETAILED DESCRIPTION OF THE FIGURES

The present invention is further clarified below in some of its preferred practical embodiments reported for purely illustrative and non-limiting purposes with reference to the attached drawings, wherein:

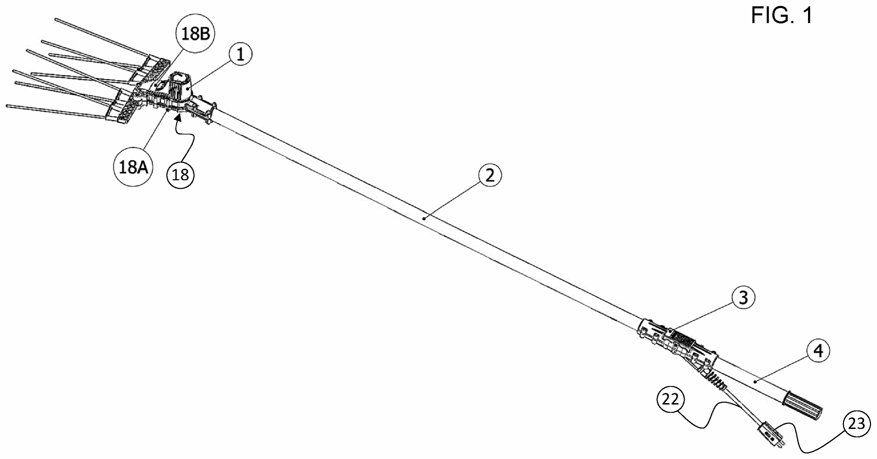

- Figure 1: shows a perspective view of the beater device according to the invention,

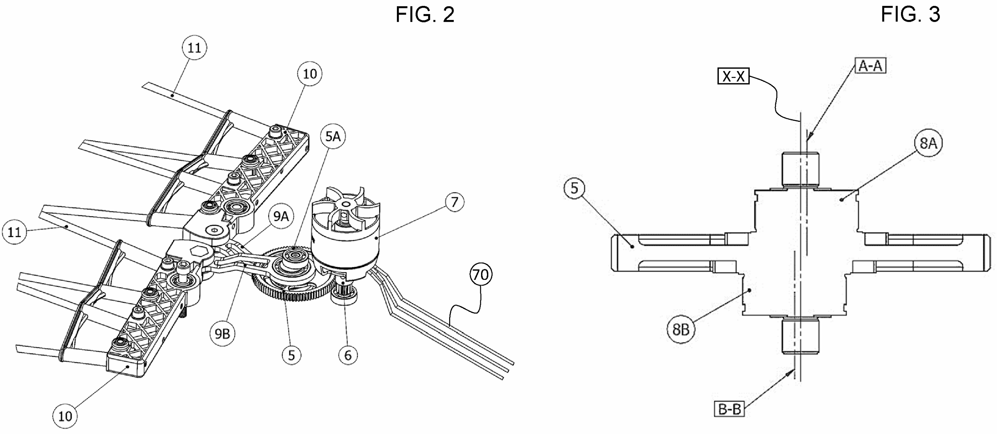

- Figure 2: shows a first perspective view of the head of the beater device according to the invention (without the crankcase),
- Figure 3: shows a cross-section of the largest diameter wheel of the motion transmission system of the beater device according to the invention,

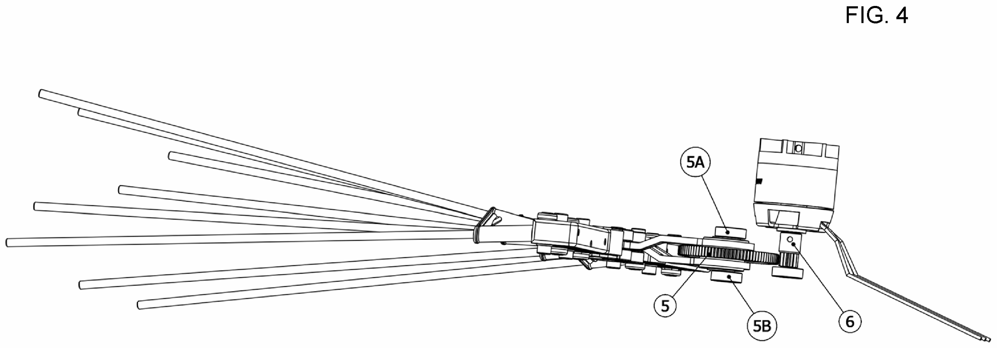

- Figure 4: shows in another perspective view the head of the beater device according to the invention (without the crankcase), and

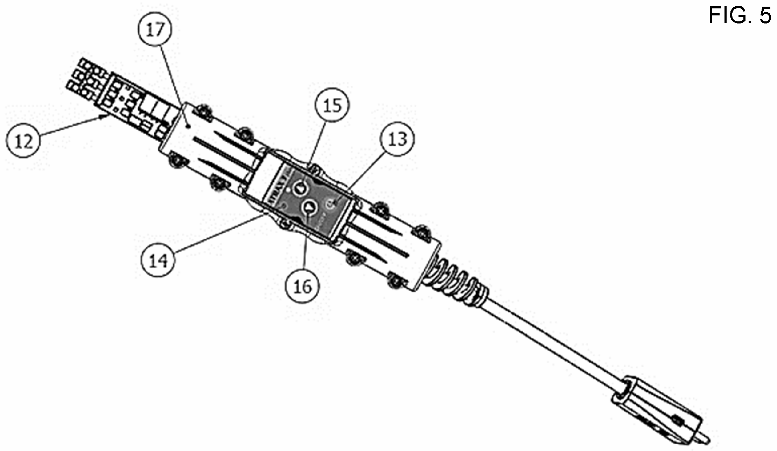

- Figure 5: shows a perspective view of a detail of the pole of the beater device according to the invention with the grip, the keypad and the control and adjustment buttons.

### DETAILED DESCRIPTION OF THE INVENTION AND OF SOME PREFERRED EMBODIMENTS

The present invention relates to an electric beater device for olive harvesting, preferably with a pulsating motion, characterized by a motion transmission system based on a double eccentric movement. In particular, the present invention relates to a beater device for use in harvesting or shaking of hanging fruit, such as walnuts, chestnuts, or the like. Conveniently, the beater according to the invention includes a double eccentric motion transmission mechanism.

Taking as an indicative example a possible embodiment of the invention, we then proceed to number the main parts of the system, with reference to the corresponding numbering of such parts in the attached drawings, where they are represented in an indicative description, without scale but simply in proportion to the dimensions of the parts one another.

According to a possible embodiment of the invention, the beater device comprises a pole 2 of adequate length, to one end of which a beating head 1 is fixed.

In particular, the beater device is of a portable type and comprises a pole 2 with a beating head 1 which is fixed to a first end of the pole 2. Conveniently, the beater device comprises a grip 17 at the other end (opposite to the first end) of the pole 2. Preferably, the grip 17 can be configured in such a way as to allow the user to grasp and operate the device with both hands.

The beating head 1 comprises:
- two bases 10, preferably placed side by side, on which a plurality of beating rods 11 are mounted,
- a motor 7 of electric type,
- a motion transmission system configured to transfer the motion generated by the motor 7 to the two bases 10,
- a containment and protection crankcase 18 wherein the motor 7 is housed and mounted.

The motion transmission system comprises two gear wheels, and in particular a first gear wheel 6 and a second gear wheel 5, which are housed in the crankcase 18, and two connecting rods 9A and 9B, each of which is operatively connected to a corresponding base 10 which supports the rods 11.

Preferably, the transmission system may comprise only (i.e. consists exclusively of) said two gear wheels 6 and 5 and said two connecting rods 9A and 9B.

The crankcase 18 comprises two covers, an upper cover 18A and a lower cover 18B, which are mechanically constrained to each other. Preferably, in order to protect the motor 7 and the motion transmission system, an upper cover 18A and a lower cover 18B, preferably threaded, may be used. Preferably, the upper cover 18A and the lower cover 18B are configured to be mechanically constrained to each other, preferably by means of a threaded coupling, so as to define - once constrained to each other - the crankcase 18 which contains and supports the motor 7 and the gear wheels 6 and 5.

Preferably, the first gear wheel 6 is of smaller diameter than the second gear wheel 5. Conveniently, the first gear wheel 6 is directly driven by an electric motor 7, which preferably is a three-phase brushless DC electric motor. More preferably, the motor 7 is mounted at the first gear wheel 6 and is directly connected to it. The first gear wheel 6 transmits motion to the second gear wheel 5, which preferably is of larger diameter than the first gear wheel.

Preferably, the first gear wheel 6 is coaxial with the output shaft of the motor 7.

Preferably, the first gear wheel 6 is supported inside the crankcase by a further bearing.

Preferably, the second gear wheel 5 is supported inside the crankcase 18 by two first bearings 5A and 5B, one upper and one lower respectively, for proper alignment and uniform rotation. Conveniently, the second gear wheel 5 comprises, and preferably incorporates, a double eccentric 8A and 8B, each of which is located on a distinct rotation axis, respectively A-A and B-B. Preferably, the two axes A-A and B-B are each arranged at a distance from the central rotation axis X-X of the second gear wheel 5.

Conveniently, two connecting rods 9A and 9B may be mounted on the double eccentric - preferably by means of respective second bearings - each associated with one of the eccentrics 8A, 8B respectively. The two connecting rods 9A and 9B transmit motion respectively to a corresponding base 10, each of which supports corresponding rods 11. Preferably, the two connecting rods 9A and 9B move the respective bases 10 forcing them into a rotary movement along a specific arc, based on their (i.e. of the bases) support/articulation point.

Preferably, the second gear wheel 5 has two opposing and parallel faces, respectively an upper face and a lower face. Preferably, the second gear wheel 5 is supported inside the crankcase 18 by two first bearings, respectively 5A and 5B, each of which is arranged at a respective face of said second gear wheel 5. In particular, the first bearing 5A supports the second gear wheel 5 from above, while the other first bearing 5B supports the second gear wheel 5 from below.

The second gear wheel 5 comprises a double eccentric and, in particular, comprises a first eccentric 8A and a second eccentric 8B, respectively arranged on the opposing faces of the second gear wheel 5. In particular, the first eccentric 8A is obtained on one face of the second gear wheel 5, while the second eccentric 8B is obtained on the other face of the second gear wheel 5.

Preferably, said first eccentric 8A and said second eccentric 8B may be made in a single piece with said second gear wheel 5.

Preferably, each eccentric 8A, 8B is centrally crossed by a respective axis A-A and B-B, which are orthogonal to the corresponding faces, opposite and parallel to each other, of the second gear wheel 5. In particular, the axes A-A and B-B are distinct (i.e. not coinciding and aligned), parallel to each other and off-centred with respect to the central axis X-X (i.e. the axis that passes through the centre of the wheel and is orthogonal to the two opposite and parallel faces) of the second gear wheel 5. In more detail, each of the axes A-A and B-B of the eccentrics is arranged at a predetermined distance from the central axis X-X of the second gear wheel 5.

Preferably, the axes A-A and B-B may be located at the same distance from the central axis X-X of the second gear wheel 5. More preferably, the axes A-A and B-B may be located at the same distance from the central axis X-X of the second gear wheel 5 and be phase-shifted by 180° with respect to each other (i.e. they are diametrically opposed to the centre of the wheel).

Each eccentric 8A, 8B is operatively connected to a corresponding connecting rod 9A, 9B. Conveniently, each eccentric 8A, 8B may support a corresponding connecting rod 9A, 9B, preferably mounted by means of a corresponding second bearing. More preferably, the two connecting rods 9A, 9B are associated with the respective eccentrics 8A, 8B by means of corresponding second bearings.

The connecting rods 9A and 9B are configured to transmit motion to respective bases 10, each comprising rods 11. Preferably, the actuation of the connecting rods 9A and 9B forces the respective bases 10 to perform a rotary movement along a defined arc, determined depending on the respective support/articulation point.

Conveniently, the bases 10 are hinged to the crankcase 18, preferably by means of third bearings, and are arranged next to each other along the lateral direction of the device.

Preferably, the two bases 10 have an elongated extension and, in particular, can have a substantially parallelepipedal shape, with a longitudinal extension direction greater than the other two directions perpendicular to it.

Preferably, each connecting rod 9A, 9B is articulated to a corresponding base 10 at a respective longitudinal end of said base. In particular, each connecting rod 9A, 9B has one end that is rotatably connected directly to a respective eccentric 8A, 8B defined/obtained on the second gear wheel 5, while the opposite end is articulated directly to a corresponding base 10 that supports the rods 11.

Preferably, each base 10 comprises a plurality of seats for the rods 11. Conveniently, the rods 11 can be fixed to the respective base 10 by means of traditional fastening members, such as screws, bolts or pins, or by means of form-fitting, interlocking, interference, friction and/or by means of a snap- fit mechanism.

Preferably, the rods 11 are positioned on the bases 10 in selected positions and angles so as to optimize the productivity of the beating and, at the same time, minimize damage to the tree and shoots.

Preferably, in a complete rotation of the second gear wheel 5 provided with double eccentric, one for each connecting rod, the bases 10 move clockwise and counterclockwise along the same circular arc, returning to the initial position, obtaining a greater phase difference compared to known solutions provided with connecting rods mounted on the same eccentric.

Preferably, the device comprises an electronic control board 12, preferably positioned at the grip 17, which is electronically connected to the motor 7 to control the operation of the motor itself.

Conveniently, the board 12 may be positioned at an appropriate point inside the pole 2. More preferably, the electronic control board 12, is placed in proximity of the grip 17, is electronically connected via wire 70 to the motor 7, which is placed inside the crankcase 18 near the beating head 1.

Preferably, the control board 12 is electronically connected or connectable to an external power supply battery by means of an electrical wiring 22 provided with a connector 23.

Preferably, the device comprises, in proximity of the grip 17, at least one control interface. More preferably, said control interface comprises at least one control element such as a button, a switch, a lever or other equivalent elements, which is electronically connected to the electronic control board 12. More preferably, the control interface comprises at least one control element for starting the motor 7 and at least one control element for controlling the operation of the motor 7.

Preferably, the device comprises a keypad electrically connected to the control board 12 for controlling the operation of the motor 7 and wherein said keypad comprises an ON/OFF button 13 for activating the motor 7 and two further buttons 15, 16 for increasing and decreasing the operating speed of the motor 7.

Preferably, the activation of the board 12 occurs via an ON/OFF button 13. Conveniently, the beater device comprises a keypad electrically connected to the control board 12 for the control of the operation of the motor 7 by the user. Preferably, the keypad comprises the ON/OFF button 13. More preferably, the keypad may be a membrane keypad 14. Preferably, the keypad 14 may be positioned on the grip 17 of the pole 2. Preferably, the beater device comprises two further buttons 15 and 16, more preferably also positioned on the membrane keypad 14, electrically connected to said control board 12 and through which it is possible to select respectively the increase or decrease of the operating speed of the beater device.

Preferably, the control of the operation of the motor occurs via the control board 12, positioned at a suitable point inside the pole 2, which is activated via an ON/OFF button 13 on a membrane keypad 14, positioned on the grip 17 of the pole 2, while via two buttons 15 and 16, also positioned on the membrane keypad 14, it is possible to select respectively the increase or decrease of the operating speed of the motor, and therefore of the device. Preferably, therefore, the keypad can include at least three buttons.

In this way, when the user activates the beater device via the ON/OFF button 13, the motor 7 - via the wheels 6 and 5, the double eccentric 8A and 8B, and the connecting rods 9A and 9B - transmits motion to the two bases 10 and the rods 11, while via the further buttons 15 and 16 the user selects the appropriate speed, depending on the morphology of the tree, the weather conditions, etc. Preferably, in the event that, for any reason, the consumption of the device exceeds the predefined limits, thus indicating an "overload" condition of the device and therefore a stress on the tree, a safety system intervenes which interrupts the operation of the device via the control board 12 of the motor 7.

Preferably, the device comprises a power consumption control unit configured to continuously monitor the electrical consumption of the motor 7. This control unit is operationally connected to the control board 12 and is designed to detect any overload conditions. If, for any reason, the device's power consumption exceeds predefined limits, thus indicating an overload condition and abnormal stress on the tree, a safety system automatically intervenes and interrupts the operation of the motor via the control board 12.

Preferably, the device may include an electronic safety system integrated into the control board 12, configured to continuously monitor the motor's electrical consumption. If consumption exceeds predefined limits, this condition is interpreted as a device overload, which corresponds to an abnormal stress on the tree and associated mechanical components, such as the gear wheel 5, the bearings 5A and 5B, and the connecting rods 9A, 9B connected to the bases 10. The monitoring may envisage current and/or power thresholds with time tolerance values, so as to distinguish instantaneous peaks from persistent overload conditions. In such circumstances, the safety system is configured to automatically intervene on the motor's control board 12, interrupting the power supply and/or reducing the power output. This allows to prevent structural damage and premature wear of the mechanical members, ensuring reliable and safe operation of the device. Preferably, the safety system can also send a signal to the operator and record the event in the memory of the control board, thus allowing for subsequent diagnostic analysis.

From what has been said it is clear that the solution according to the present invention is particularly advantageous in that:
- it is mechanically simple in construction, making it easy and economical to build and maintain,
- it offers a particularly light and easy to handle beater,
- it allows for a more efficient beating of the fruit, while preserving the condition of the plant;
- it is easy and intuitive to control by the operator.

The beater device according to the invention is characterised in that it is provided with a motion transmission system based on a double eccentric movement, i.e. with two separate eccentrics, resulting in a greater phase difference during operation compared to known solutions and, at the same time, a reduction in the overall weight of the device. This, combined with the ability to vary the operating speed of the beating rods and the presence of a power consumption control unit, allows for reduced energy, production, and maintenance costs, in addition to allowing for optimal adaptation to the morphology of the olive tree, thus minimizing or avoiding stress on the tree and young shoots. Furthermore, potential damage to the device due to mechanical stress is significantly reduced, thanks to the limited friction between its metal parts.

Furthermore, thanks to the motion transmission system adopted by the invention, any faults can be repaired directly at the place of use of the device, in extremely short times and even by the user himself, making its use considerably simpler, more reliable and economical than devices known to date.

Furthermore, the device according to the invention offers the possibility of selecting multiple operating speeds, combined with an instantaneous consumption sensor. This allows the user, based on the variety of tree, weather conditions, and, more generally, specific parameters, to select the most suitable operating speed, in order to obtain optimal harvesting on one hand and maximum protection of the sensitive areas of the tree on the other hand, while also ensuring optimized energy consumption. High consumption during use of the device indicates greater resistance, which translates into stress for both the tree and the device itself.

In addition, the use of a double eccentric in the motion transmission advantageously allows for a drastic reduction in noise, to unprecedented levels compared to the state of the art and in any case lower than the minimum limits established by European regulations, as well as a significant reduction in vibrations.

Advantageously, the device can use a brushless motor, which guarantees adequate torque with low consumption, low weight, greater autonomy and minimal maintenance.

All the aspects outlined above contribute to making the production cost of the device according to the invention significantly lower than that of known beater devices currently available on the market.

## Claims

1. Electric beater device, of portable type, for harvesting olives or similar hanging fruit, comprising a pole (2) with a grip (17) and a beating head (1) which is fixed to a first end of the pole (2), wherein the beating head (1) comprises:
- two bases (10) on which a plurality of rods (11) are mounted,
- an electric motor (7),
- a motion transmission system configured to transfer the motion generated by the motor (7) to the two bases (10),
- a containment and protection crankcase (18) wherein the motor (7) is housed and mounted,
and wherein:
- the motion transmission system comprises a first gear wheel (6) and a second gear wheel (5), which are housed in the crankcase (18), and two connecting rods (9A, 9B), each of which is operationally connected to a corresponding base (10) which supports the rods (11),
- the first gear wheel (6) is driven directly by the motor (7) and transmits the movement to the second gear wheel (5),
- the second gear wheel (5) comprises a first eccentric (8A) and a second eccentric (8B), arranged respectively on opposite faces of the second gear wheel (5),
- each eccentric (8A, 8B) is operationally connected to a corresponding connecting rod (9A, 9B),
and **characterised in that** said first eccentric (8A) and said second eccentric (8B) are passed through centrally by respective axes (A-A, B-B) which are distinct and parallel to each other, and also off-centred with respect to the central axis (X-X) of the second wheel (5).

2. Device according to claim 1, wherein the first gear wheel (6) is of smaller diameter than the second gear wheel (5).

3. Device according to one or more of the preceding claims, wherein said motor (7) is a three-phase direct current brushless electric motor.

4. Device according to one or more of the preceding claims, wherein said first eccentric (8A) and said second eccentric (8B) are made in a single piece with said second toothed wheel (5).

5. Device according to one or more of the preceding claims, wherein each connecting rod (9A, 9B) comprises:
- one end which is rotatably connected directly to a respective eccentric (8A, 8B) obtained on the second gear wheel (5), and
- the opposite end which is directly articulated to a corresponding base (10).

6. Device according to one or more of the preceding claims, wherein the axes (A-A, B-B) of said first eccentric (8A) and of said second eccentric (8B) are at the same distance from the central axis (X-X) of the second gear wheel (5).

7. Device according to one or more of the preceding claims, wherein the axes (A-A, B-B) of said first eccentric (8A) and of said second eccentric (8B) are at the same distance from the central axis (X-X) of the second gear wheel (5) and are phase-shifted by 180°.

8. Device according to one or more of the preceding claims, wherein:
- the first gear wheel (6) is coaxial with the output shaft of the motor (7) and is supported inside the crankcase by a further bearing,
- the two connecting rods (9A, 9B) are associated with the respective eccentrics (8A, 8B) by means of corresponding second bearings.

9. Device according to one or more of the preceding claims, wherein the second gear wheel (5) is supported inside the crankcase (18) by two first bearings (5A, 5B), each of which is arranged at a respective face of said second gear wheel (5).

10. Device according to one or more of the preceding claims, wherein the crankcase (18) comprises an upper cover (18A) and a lower cover (18B) which are mechanically constrained to each other.

11. Device according to one or more of the preceding claims, wherein the bases (10) are hinged to the crankcase (18) and are arranged next to each other along the lateral direction of the device.

12. Device according to one or more of the preceding claims, comprising an electronic control board (12), preferably positioned at the grip (17), which is electronically connected to the motor (7) to control the operation of the motor (7).

13. Device according to the preceding claim, comprising a keypad electrically connected to the control board (12) for controlling the operation of the motor (7) and wherein said keypad comprises an ON/OFF button (13) for activating the motor (7) and two further buttons (15, 16) for increasing and decreasing the operating speed of the motor (7).

14. Device according to one or more of the preceding claims, wherein the control board (12) is configured to stop the activation of the motor (7) when an overload condition of the device is identified.

15. Device according to one or more of the preceding claims, wherein the bases (10) are hinged to the crankcase (18) by means of third bearings and are arranged next to each other along the lateral direction of the device.

## Patentansprüche

1. Elektrische Schlagvorrichtung vom tragbaren Typ zum Ernten von Oliven oder ähnlichen hängenden Früchten, umfassend einen Pfosten (2) mit einem Griff (17) und einen Schlagkopf (1), der an einem ersten Ende des Pfostens (2) befestigt ist, wobei der Schlagkopf (1) umfasst:
- zwei Basen (10), auf denen eine Vielzahl von Stangen (11) montiert sind,
- einen Elektromotor (7),
- ein Bewegungsübertragungssystem, das konfiguriert ist, um die von dem Motor (7) erzeugte Bewegung auf die zwei Basen (10) zu übertragen,
- ein Gehäuse- und Schutzkurbelgehäuse (18), in dem der Motor (7) untergebracht und montiert ist,
und wobei:
- das Bewegungsübertragungssystem ein erstes Zahnrad (6) und ein zweites Zahnrad (5), die im Kurbelgehäuse (18) untergebracht sind, sowie zwei Pleuelstangen (9A, 9B) umfasst, von denen jede mit einer entsprechenden Basis (10) betriebswirksam verbunden ist, die die Stangen (11) trägt,
- das erste Zahnrad (6) direkt vom Motor (7) angetrieben wird und die Bewegung auf das zweite Zahnrad (5) überträgt,
- das zweite Zahnrad (5) einen ersten Exzenter (8A) und einen zweiten Exzenter (8B) umfasst, die jeweils an gegenüberliegenden Seiten des zweiten Zahnrads (5) angeordnet sind,
- jeder Exzenter (8A, 8B) mit einer entsprechenden Pleuelstange (9A, 9B) betriebswirksam verbunden ist,
und **dadurch gekennzeichnet, dass** der erste Exzenter (8A) und der zweite Exzenter (8B) mittig von jeweiligen Achsen (A-A, B-B) durchsetzt sind, die voneinander unterschiedlich und parallel zueinander verlaufen und zudem gegenüber der Mittelachse (X-X) des zweiten Rades (5) außermittig angeordnet sind.

2. Vorrichtung nach Anspruch 1, wobei das erste Zahnrad (6) einen kleineren Durchmesser als das zweite Zahnrad (5) aufweist.

3. Vorrichtung nach einem oder mehreren der vorhergehenden Ansprüche, wobei der Motor (7) ein bürstenloser Dreiphasen-Gleichstrom-Elektromotor ist.

4. Vorrichtung nach einem oder mehreren der vorhergehenden Ansprüche, wobei der erste Exzenter (8A) und der zweite Exzenter (8B) einstückig mit dem zweiten Zahnrad (5) ausgebildet sind.

5. Vorrichtung nach einem oder mehreren der vorhergehenden Ansprüche, wobei jede Pleuelstange (9A, 9B) Folgendes umfasst:
- ein Ende, das direkt mit einem jeweiligen Exzenter (8A, 8B) drehbar verbunden ist, der am zweiten Zahnrad (5) ausgebildet ist, und
- das gegenüberliegende Ende, das direkt an einer entsprechenden Basis (10) gelenkig gelagert ist.

6. Vorrichtung nach einem oder mehreren der vorhergehenden Ansprüche, wobei die Achsen (A-A, B-B) des ersten Exzenters (8A) und des zweiten Exzenters (8B) den gleichen Abstand zur Mittelachse (X-X) des zweiten Zahnrades (5) aufweisen.

7. Vorrichtung nach einem oder mehreren der vorhergehenden Ansprüche, wobei die Achsen (A-A, B-B) des ersten Exzenters (8A) und des zweiten Exzenters (8B) den gleichen Abstand zur Mittelachse (X-X) des zweiten Zahnrades (5) aufweisen und um 180° phasenverschoben sind.

8. Vorrichtung nach einem oder mehreren der vorhergehenden Ansprüche, wobei:
- das erste Zahnrad (6) koaxial zur Abtriebswelle des Motors (7) ist und innerhalb des Kurbelgehäuses durch ein weiteres Lager gelagert ist,
- die zwei Pleuelstangen (9A, 9B) über entsprechende zweite Lager mit den jeweiligen Exzentern (8A, 8B) assoziiert sind.

9. Vorrichtung nach einem oder mehreren der vorhergehenden Ansprüche, wobei das zweite Zahnrad (5) innerhalb des Kurbelgehäuses (18) durch zwei erste Lager (5A, 5B) gelagert ist, von denen jedes an einer jeweiligen Stirnseite des zweiten Zahnrads (5) angeordnet ist.

10. Vorrichtung nach einem oder mehreren der vorhergehenden Ansprüche, wobei das Kurbelgehäuse (18) eine obere Abdeckung (18A) und eine untere Abdeckung (18B) umfasst, die mechanisch miteinander eingespannt sind.

11. Vorrichtung nach einem oder mehreren der vorhergehenden Ansprüche, wobei die Basen (10) am Kurbelgehäuse (18) angelenkt und entlang der seitlichen Richtung der Vorrichtung nebeneinander angeordnet sind.

12. Vorrichtung nach einem oder mehreren der vorhergehenden Ansprüche, umfassend eine elektronische Steuerplatine (12), die vorzugsweise am Griff (17) positioniert ist und die elektronisch mit dem Motor (7) verbunden ist, um den Betrieb des Motors (7) zu steuern.

13. Vorrichtung nach dem vorhergehenden Anspruch, umfassend eine Tastatur, die elektrisch mit der Steuerplatine (12) verbunden ist, um den Betrieb des Motors (7) zu steuern, wobei die Tastatur eine Ein-/Aus-Taste (13) zum Aktivieren des Motors (7) sowie zwei weitere Tasten (15, 16) zum Erhöhen und Verringern der Betriebsdrehzahl des Motors (7) umfasst.

14. Vorrichtung nach einem oder mehreren der vorhergehenden Ansprüche, wobei die Steuerplatine (12) dazu konfiguriert ist, die Aktivierung des Motors (7) zu stoppen, wenn ein Überlastzustand der Vorrichtung erkannt wird.

15. Vorrichtung nach einem oder mehreren der vorhergehenden Ansprüche, wobei die Basen (10) mittels dritter Lager am Kurbelgehäuse (18) angelenkt und entlang der seitlichen Richtung der Vorrichtung nebeneinander angeordnet sind.

## Revendications

1. Dispositif batteur électrique, de type portable, destiné à la récolte d'olives ou de fruits suspendus similaires, comprenant une perche (2) pourvue d'une poignée (17) et d'une tête de battage (1) fixée à une première extrémité de la perche (2), la tête de battage (1) comprenant :
- deux bases (10) sur lesquelles sont montées une pluralité de tiges (11),
- un moteur électrique (7),
- un système de transmission de mouvement conçu pour transmettre le mouvement généré par le moteur (7) aux deux bases (10),
- un carter de confinement et de protection (18) dans lequel le moteur (7) est logé et monté,
et dans lequel :
- le système de transmission de mouvement comprend une première roue dentée (6) et une seconde roue dentée (5), étant logées dans le carter (18), ainsi que deux tiges de liaison (9A, 9B), chacune étant reliée de manière fonctionnelle à une base correspondante (10) qui supporte les tiges (11),
- la première roue dentée (6) est entraînée directement par le moteur (7) et transmet le mouvement à la seconde roue dentée (5),
- la seconde roue dentée (5) comprend un premier excentrique (8A) et un second excentrique (8B), disposés respectivement sur les faces opposées de la seconde roue dentée (5),
- chaque excentrique (8A, 8B) est relié de manière fonctionnelle à une tige de liaison correspondante (9A, 9B),
et **caractérisé en ce que** ledit premier excentrique (8A) et ledit second excentrique (8B) sont traversés en leur centre par des axes respectifs (A-A, B-B) qui sont distincts et parallèles entre eux, et également décentrés par rapport à l'axe central (X-X) de la seconde roue (5).

2. Dispositif selon la revendication 1, la première roue dentée (6) présentant un diamètre inférieur à celui de la seconde roue dentée (5).

3. Dispositif selon l'une ou plusieurs des revendications précédentes, ledit moteur (7) étant un moteur électrique triphasé à courant continu sans balais.

4. Dispositif selon l'une ou plusieurs des revendications précédentes, ledit premier excentrique (8A) et ledit second excentrique (8B) étant réalisés d'un seul tenant avec ladite seconde roue dentée (5).

5. Dispositif selon l'une ou plusieurs des revendications précédentes, chaque tige de liaison (9A, 9B) comprenant :
- une extrémité étant directement reliée de manière rotative à un excentrique correspondant (8A, 8B) obtenu sur la seconde roue dentée (5), et
- l'extrémité opposée, étant directement articulée à une base correspondante (10).

6. Dispositif selon l'une ou plusieurs des revendications précédentes, les axes (A-A, B-B) dudit premier excentrique (8A) et dudit second excentrique (8B) étant situés à la même distance de l'axe central (X-X) de la seconde roue dentée (5).

7. Dispositif selon l'une ou plusieurs des revendications précédentes, les axes (A-A, B-B) dudit premier excentrique (8A) et dudit second excentrique (8B) étant situés à la même distance de l'axe central (X-X) de la seconde roue dentée (5) et présentant un déphasage de 180°.

8. Dispositif selon l'une ou plusieurs des revendications précédentes, dans lequel:
- la première roue dentée (6) est coaxiale à l'arbre de sortie du moteur (7) et est supportée à l'intérieur du carter par un roulement supplémentaire,
- les deux tige de liaisons (9A, 9B) sont associées aux excentriques respectifs (8A, 8B) au moyen de deuxièmes roulements correspondants.

9. Dispositif selon l'une ou plusieurs des revendications précédentes, la seconde roue dentée (5) étant supportée à l'intérieur du carter (18) par deux premiers roulements (5A, 5B), chacun d'entre eux étant disposé au niveau d'une face respective de ladite seconde roue dentée (5).

10. Dispositif selon l'une ou plusieurs des revendications précédentes, le carter (18) comprenant un couvercle supérieur (18A) et un couvercle inférieur (18B) qui sont mécaniquement contraints l'un à l'autre.

11. Dispositif selon l'une ou plusieurs des revendications précédentes, les bases (10) étant articulées sur le carter (18) et étant disposées les unes à côté des autres le long de la direction latérale du dispositif.

12. Dispositif selon l'une ou plusieurs des revendications précédentes, comprenant une carte de commande électronique (12), placée de préférence au niveau de la poignée (17), qui est reliée électroniquement au moteur (7) afin de commander le fonctionnement du moteur (7).

13. Dispositif selon la revendication précédente, comprenant un clavier relié électriquement à la carte de commande (12) pour commander le fonctionnement du moteur (7) et ledit clavier comprenant un bouton MARCHE/ARRÊT (13) destiné à activer le moteur (7) et deux boutons supplémentaires (15, 16) destinés à augmenter et à diminuer la vitesse de fonctionnement du moteur (7).

14. Dispositif selon l'une ou plusieurs des revendications précédentes, la carte de commande (12) étant configurée pour interrompre l'activation du moteur (7) lorsqu'une condition de surcharge du dispositif est détectée.

15. Dispositif selon l'une ou plusieurs des revendications précédentes, les bases (10) étant articulées au carter (18) au moyen de troisièmes roulements et étant disposées les unes à côté des autres le long de la direction latérale du dispositif.
